# EUROPÄISCHE PATENTANMELDUNG

(11) **EP 3 693 259 A1**
(43) Veröffentlichungstag der Anmeldung: **12.08.2020**
(21) Anmeldenummer: 20156235.2
(22) Anmeldetag: 07.02.2020
(51) Int. Cl.: B62J 45/415

(54) **VERFAHREN ZUM BESTIMMEN VON LEISTUNGSDATEN BEIM FAHREN EINES FAHRRADS UND ZWEIRADKOMPONENTE**

(30) Priorität: 09.02.2019 DE 102019103231
(71) Anmelder: DT Swiss AG, 2504 Biel (CH)
(72) Erfinder: Walthert, Martin, CH-3270 Aarberg (CH); Hugentobler, Simon, CH-3097 Liebefeld (CH); Mullarkey, Seamus, CH-8632 Tann (CH); Jonasson, Jonas Gretar, CH-8800 Thalwil (CH); Ballard, Jean-Paul Victor, CH-8800 Thalwil (CH)
(74) Vertreter: BSB Patentanwälte Schütte & Engelen Partnerschaft mbB

(57) **Zusammenfassung**

Zweiradkomponente und Verfahren zum Bestimmen von Leistungsdaten durch das Erfassen und Auswerten von Sensordaten beim Fahren eines wenigstens teilweise muskelbetriebenen Fahrrads (100) auf einer Straße mit wenigstens zwei Sensoren (20, 35) wobei Luftdrucksignale (21) mit einem Luftdrucksensor (20) erfasst werden und aktuelle Steigungswert (201) des Weges (200) abgeleitet werden. Es werden Streckendaten erfasst und ein aktueller Geschwindigkeitswert erfasst und es werden Leistungsdaten aus dem aktuellen Steigungswert (201) und der aktuellen Geschwindigkeit ermittelt.

## Beschreibung

Die vorliegende Erfindung betrifft eine Zweiradkomponente und ein Verfahren zum Bestimmen von Leistungsdaten durch Erfassen und Auswerten von Sensordaten bzw. sensorisch erfassten Daten beim Fahren eines wenigstens teilweise muskelbetriebenen Zweirads auf einem Weg und insbesondere einer Straße. Obwohl die Erfindung im Folgenden mit Bezug auf den Einsatz an einem wenigstens teilweise muskelbetriebenen Fahrrad beschrieben wird, kann das Verfahren auch an rein muskelbetriebenen oder teilweise oder rein elektrisch betriebenen Fahrrädern eingesetzt werden.

Die vorliegende Erfindung kann insbesondere bei einem System zum Messen eines Luftwiderstandsbeiwertes (englisch: aerodynamic drag coefficient - CdA) eines Fahrrads mit einem Fahrer eingesetzt werden. Wenn ein Luftwiderstandsbeiwert beispielsweise eines Fahrrads mit einem Fahrer ermittelt werden soll, werden verschiedene Messwerte benötigt. Beispielsweise ist es wichtig, einen Wert für die aktuelle Steigung zu kennen.

Auch heute wird wird zum Beispiel häufig eine Höhenposition von Fahrrädern über einen Luftdrucksensor ermittelt. Möglich ist aber auch die Erfassung einer Höhenposition über ein Satellitensystem wie beispielsweise das GPS-System oder ein anderes Satellitennavigationssystem. Mit einem Satellitensystem kann eine hohe Genauigkeit der Höhenbestimmung durchgeführt werden. Über mehrere nacheinander erfolgende Messungen kann eine Steigung abgeleitet werden. Nachteilig daran ist aber, dass die Auflösung der Höhenposition relativ gering ist. Das führt dazu, dass beispielsweise eine Steigung an einem Berg oder Hügel nur mit recht großer Ungenauigkeit ermittelt wird. Das Ergebnis reicht zur Anschauung während oder auch nach einer Tour, aber jedenfalls nicht um einen Luftwiderstandsbeiwert in brauchbarer Qualität zu ermitteln.

Eine andere Möglichkeit zur Bestimmung einer Höhe oder Höhenänderung ist es, einen Luftdrucksensor einzusetzen, um aus dem Luftdrucksignal eine (relative) Höhe abzuleiten. Luftdrucksensoren arbeiten mit hoher Auflösung, die erheblich besser ist, als die von Satellitensystemen. Nachteilig bei der Verwendung von Luftdrucksensoren zur Erfassung des Umgebungsluftdrucks ist aber, dass das Messergebnis durch Wetteränderungen wie steigenden oder fallenden Luftdruck oder auch durch lokale Störungen oder durch beispielsweise einen Sensordrift systematisch oder zeitweise und zufällig verfälscht werden kann.

Es ist deshalb die Aufgabe der vorliegenden Erfindung, ein Verfahren zum Bestimmen von Leistungsdaten durch das Erfassen und Auswerten von Sensordaten beim Fahren und eine Zweiradkomponente zur Verfügung zu stellen, womit Leistungsdaten beim Fahren erfassbar sind.

Diese Aufgabe wird durch ein Verfahren mit den Merkmalen des Anspruchs 1 und durch eine Zweiradkomponente mit den Merkmalen des Anspruchs 14 gelöst. Bevorzugte Weiterbildungen sind Gegenstand der Unteransprüche. Weitere Vorteile und Merkmale der vorliegenden Erfindung ergeben sich aus der allgemeinen Beschreibung und aus der Beschreibung der Ausführungsbeispiele.

Ein erfindungsgemäßes Verfahren zum Bestimmen von Leistungsdaten durch das Erfassen und insbesondere Auswerten von Sensordaten oder sensorisch erfassten Daten beim Fahren eines wenigstens teilweise muskelbetriebenen Fahrrads auf einem Weg und insbesondere einer Straße wird mit wenigstens zwei Sensoren durchgeführt. Dabei werden wenigstens Signale wie Luftdrucksignale erfasst und die folgenden Schritte in dieser oder einer anderen sinnvollen Reihenfolge durchgeführt.
- Erfassen aktueller (insbesondere charakteristischen) Luftdrucksignale für einen Umgebungsdruck mit wenigstens einem Luftdrucksensor;
- Erfassen von Streckendaten und Bestimmen eines aktuellen Geschwindigkeitswerts des Fahrrads;
- Bestimmen eines aktuellen Steigungswerts des Weges aus den erfassten Luftdrucksignalen und den erfassten Streckendaten
- Ermittlung von Leistungsdaten aus dem aktuellen Steigungswert und dem aktuellen Geschwindigkeitswert.

Die vorliegende Erfindung hat viele Vorteile. Ein erheblicher Vorteil des erfindungsgemäßen Verfahrens besteht darin, dass aus den jeweils aktuellen Luftdrucksignalen und den Streckensignalen ein Geschwindigkeitswert des Fahrrads und ein Steigungswert des Weges abgeleitet wird. Unter Berücksichtigung des aktuellen Geschwindigkeitswerts des Fahrrads und des aktuellen Steigungswerts des Weges werden (charakteristische) Leistungsdaten bestimmt. Die Messung mit einem Luftdrucksensor ist schnell und genau und kann mit hoher Frequenz durchgeführt werden. Schon kleinste Änderungen der Höhe können erfasst werden.

Vorzugsweise wird eine Beschleunigung des Fahrrads berücksichtigt. Die Beschleunigung wird insbesondere aus dem Geschwindigkeitswert abgeleitet. Die Beschleunigung kann auch durch einen separaten Sensor bestimmt werden.

Das Gewicht des Fahrrads inklusive des Fahrers und seiner Ausrüstung kann zuvor bestimmt und eingegeben werden. Möglich ist es auch, eine Art von Leistungsdaten zu ermitteln, die das Gewicht noch nicht berücksichtigen. Für manche Anwendungsfällen kann auf die Berücksichtigung des Gewichts verzichtet werden.

Vorzugsweise wird ein aktuelles Höhenmaß für die aktuelle Höhe des Fahrrads (insbesondere periodisch) abgeleitet.

Es ist bevorzugt, wenigstens ein aktuelles Höhensignal durch Erfassung von Daten von einem Satellitensystem oder Navigationssatellitensystem insbesondere für die aktuelle Höhe des Fahrrads (periodisch) zu ermitteln.

Es ist auch bevorzugt, dass ein Gyroskop und/oder ein Neigungssensor umfasst ist und verwendet wird. Ein Neigungssensorwert kann zusätzlich verwendet werden, um die Genauigkeit des Steigungswerts zu verbessern.

Auch aus dem Höhensignal kann ein Maß für eine Steigung des Weges abgeleitet werden. Der Steigungswert wird vorzugsweise mit dem Maß für die Steigung des Weges verglichen, um die Plausibilität zu überprüfen und die Genauigkeit zu verbessern. Dadurch können Störsignale erkannt werden.

Vorzugsweise wird (periodisch) ein aktueller Höhenwert aus dem aktuellen Luftdrucksignal für den Umgebungsdruck unter Berücksichtigung des aktuellen Höhensignals (für die aktuelle Höhe des Fahrrads) ermittelt.

Dabei wird vorzugsweise wenigstens eine Messfrequenz zur Erfassung von Signalen (mit einer Steuereinrichtung) variabel eingestellt. Vorzugsweise wird wenigstens eine Messfrequenz zur Erfassung von Luftdrucksignalen und/oder eine Messfrequenz zur Erfassung von Höhensignalen mit einer Steuereinrichtung variabel eingestellt.

Es ist möglich , dass zur Korrektur des Luftdrucksignals ein aktuelles Höhensignal von einem Satellitensystem herangezogen wird. Eine solche Korrektur findet vorzugsweise nur dann statt, wenn sich bei einer bestimmten Anzahl von Messungen eine bestimmte Abweichung zwischen einem aus dem aktuellen Luftdrucksignal ermittelten aktuellen Höhenmaß und dem Höhensignal aus dem Satellitensystem ergibt. Dadurch können Wettereinflüsse und sich während der Fahrt verändernde atmosphärische Bedingungen berücksichtigt werden. Solche Einflüsse können herausgerechnet werden und die Genauigkeit kann erhöht werden.

Besonders vorteilhaft ist, dass die Messfrequenz zur Erfassung von Messsignalen wie den Luftdrucksignalen und den Höhensignalen variabel ist und aktiv mit der Steuereinrichtung angepasst wird.

Vorzugsweise erfolgt eine Anpassung wenigstens einer Messfrequenz mittels einer lokal an der Zweiradkomponente oder dem Fahrrad vorhandenen Steuereinrichtung. Dadurch kann die Messfrequenz zur Messung von Luftdrucksignalen und/oder von Höhensignalen flexibel und jederzeit verändert werden.

Die Messfrequenz oder wenigstens eine Messfrequenz kann so jederzeit an aktuelle Bedingungen oder Anforderungen angepasst werden. Beispielsweise kann eine Anpassung in Abhängigkeit von dem Zustand der Energieversorgung abhängen. Wenn der Energievorrat unter einer Schwellwert fällt, kann die Messfrequenz der Erfassung von Luftdrucksignalen und/oder von Höhensignalen verringert werden, um die Laufzeit zu erhöhen. Bei vorab bekannten Fahrstrecken kann die Messfrequenz an die Fahrstrecke bzw. die jeweilige Restfahrstrecke dynamisch angepasst werden.

Es ist bevorzugt, die Messfrequenz zu erhöhen, wenn es z. B. für eine hohe Präzision sinnvoll oder nötig ist. Wenn es für die gewünschte Genauigkeit des aktuellen Höhenwertes oder damit berechneter Werte ausreicht, kann die Messfrequenz zur Messung von Luftdrucksignalen und/oder die Messfrequenz zur Messung von Höhensignalen auch verringert werden. Dadurch kann einerseits die Präzision verbessert und es kann andererseits auch die Laufzeit verlängert werden. Durch eine Verringerung der Messfrequenz kann Energie gespart und damit die Laufzeit verlängert werden.

Möglich und bevorzugt ist es, die Messfrequenz zur Erfassung von Luftdrucksignalen und/oder die Messfrequenz zur Erfassung von Höhensignalen separat anzupassen. So ist z. B. meist der Energiebedarf bei der Erfassung von Höhensignalen größer als der Energiebedarf zur Erfassung von Luftdrucksignalen. Eine Halbierung der Messfrequenz von Höhensignalen verringert so den Leistungsbedarf und verlängert damit die Laufzeit.

Möglich und bevorzugt ist auch eine dynamische Anpassung. So kann die Messfrequenz zur Erfassung von Höhensignalen stark abgesenkt werden, wenn sich das Höhensignal über mehrere Messungen hin nur wenig oder gar nicht oder konstant ändert. Insbesondere geringe oder keine Änderungen deuten auf eine fahrt in der Ebene hin, sodass die Messfrequenz halbiert, geviertelt oder noch weiter reduziert auf 1/5 oder 1/10 oder 1/20 verringert werden kann.

In anderen Situationen kann die Messfrequenz auch erhöht und z. B. verdoppelt werden. Beispielsweise wenn ein Anstieg beginnt oder auch wenn die Fahrgeschwindigkeit erhöht wird oder hoch ist.

Insgesamt kann einerseits die Präzision erhöht und andererseits zu anderen Zeitpunkten Energie gespart und damit die Laufzeit Laufzeit verlängert werden.

Die Erfindung wird insbesondere an wenigstens teilweise oder vollständig muskelbetriebenen Zweirädern und insbesondere Fahrrädern eingesetzt. Deshalb kann der Begriff Zweiradkomponente auch durchgängig durch den Begriff Fahrradkomponente ersetzt werden. Ein Zweirad und insbesondere ein Fahrrad im Sinne der vorliegenden Erfindung weist vorzugsweise zwei Räder an zwei unterschiedlichen Achsen auf. Insbesondere sind die beiden Räder im bestimmungsgemäßen Gebrauch bei der Fahrt (wenigstens im Wesentlichen oder vollständig) hintereinander angeordnet.

Möglich und vorzugsweise vorgesehen ist der Einsatz insbesondere aber auch an sogenannten "Leichten Elektrofahrzeugen" (englisch: "Light Electric Vehicles" - abgekürzt LEV), was Elektrofahrzeuge mit zwei oder auch vier Rädern sind, die von einer Batterie, Brennstoffzelle oder einem Hybridantrieb angetrieben werden und im Allgemeinen weniger als 100 kg wiegen und vorzugsweise weniger als 80 kg und besonders bevorzugt weniger als 50 kg oder 30 kg wiegen. Besonders bevorzugt ist die Erfindung für den Einsatz an nach oben offenen Zweirädern oder Fahrrädern eingesetzt. Das sind Zweiräder ohne Dach.

Als Sensor zur Erfassung eines aktuellen Luftdrucksignals wird insbesondere einen Luftdrucksensor verwendet.

Besonders bevorzugt wird die oder wenigstens eine Messfrequenz in Abhängigkeit von wenigstens einer aktuellen Fahrbedingung eingestellt.

Insbesondere wird die Messfrequenz in Abhängigkeit von den aktuellen Fahrbedingungen eingestellt. Besonders wird bei der Einstellung der Messfrequenz wenigstens ein Parameter berücksichtigt, welcher einer Gruppe von Parametern der aktuellen Fahrbedingungen entnommen ist. Die Gruppe der Parameter der aktuellen Fahrbedingungen umfasst insbesondere eine Ausrichtung des Weges zur Horizontalen wie eine Neigung, ein Gefälle oder eine Steigung des Weges, eine Fahrgeschwindigkeit des Fahrrads, eine absolute Höhe des Fahrrads, eine Feuchte, Dichte und/oder Temperatur der Umgebungsluft, eine lokale Position (über z. B. GPS oder ähnliches), einen Wert der Erdbeschleunigung und den Zustand einer Energieversorgung und ähnliche Werte mehr. Auch die Fahrgeschwindigkeit, die relative Windrichtung und die relative Luftgeschwindigkeit relativ zur Zweiradkomponente können von der Gruppe der Parameter umfasst sein. Bei den Parametern werden insbesondere jeweils aktuelle Werte verwendet.

Besonders bevorzugt ist wenigstens eine Messfrequenz von der Fahrgeschwindigkeit und der Neigung (Gefälle und Steigung) des Weges abhängt. Insbesondere hängt wenigstens eine Messfrequenz von dem Zustand einer Energieversorgung ab.

Vorzugsweise ist eine Auflösung eines Höhenmaßes und/oder Höhenwertes wenigstens besser als 1/3 oder 1/2 der (nativen) Auflösung des Höhensignals. Insbesondere ist eine Auflösung eines Höhenmaßes und/oder Höhenwertes besser als 1 m und insbesondere besser als 50 cm oder besser als 25 cm oder 10 cm oder 5 cm.

Vorzugsweise wird eine Höhenänderung aus dem aktuellen Luftdrucksignal und einem Referenzsignal des Luftdrucks abgeleitet. Ein Referenzsignal des Luftdrucks kann auch als Referenzluftdrucksignal bezeichnet werden.

Vorzugsweise wird ein Referenzsignal zu Beginn einer Fahrt ermittelt oder eingegeben. Das Referenzsignal kann auch aus einem übertragenen Luftdrucksignal abgeleitet werden. Beispielsweise kann ein Luftdrucksignal über Funk oder über ein Netzwerk oder eine Internetverbindung übertragen werden und anschließend (wenigstens zunächst) als Referenzsignal verwendet werden. Möglich ist es auch, dass periodisch ein Referenzsignal aus einem Netzwerk oder aus dem Internet oder per Funk empfangen wird.

In besonders bevorzugten Weiterbildungen wird das Referenzsignal periodisch aus wenigstens einem zuvor erfassten Luftdrucksignal abgeleitet. Besonders bevorzugt wird das Referenzsignal aus einer Mehrzahl zuvor erfasster Luftdrucksignale abgeleitet. Beispielsweise können mit geringem zeitlichen Abstand mehrere Luftdrucksignale erfasst werden, deren zeitlicher Abstand so gering ist, dass sich die Position des Fahrrads während der Messung praktisch nicht (signifikant) verändert hat. Durch eine Erfassung einer Mehrzahl von Signalen kann das Rauschen der Messwerte verringert werden, sodass ein hochqualitatives Signal als Referenzsignal verwendet wird. Es ist ebenso möglich, dass auch für die Luftdrucksignale jeweils eine Mehrzahl an Signalen erfasst wird und daraus beispielsweise ein Mittelwert gebildet wird.

Vorzugsweise wird das aktuelle Luftdrucksignal periodisch erfasst. Das Luftdrucksignal wird vorzugsweise aus einer Mehrzahl von mit dem Luftdrucksensor aufgenommenen Messwerten ermittelt. Insbesondere ist eine Messfrequenz der mit dem Luftdrucksensor aufgenommenen Messwerte größer als 50 Hz (1/s) und vorzugsweise größer 250 Hz. Besonders bevorzugt ist die Messfrequenz der mit dem Luftdrucksensor aufgenommenen Messwerte größer als 500 Hz oder größer 1 kHz oder 5 kHz.

Es ist bevorzugt, dass mit dem Luftdrucksensor aufgenommene Messwerte gefiltert werden und dass aus den gefilterten Messwerten ein Luftdrucksignal abgeleitet wird.

Vorzugsweise wird ein Luftdrucksignal aus wenigstens drei und vorzugsweise wenigstens fünf oder zehn mit dem Luftdrucksensor aufgenommenen Messwerten abgeleitet.

In allen Ausgestaltungen ist es bevorzugt, dass wenigstens ein Beschleunigungswert erfasst wird.

Es ist möglich und bevorzugt, dass das aktuelle Höhensignal interpoliert wird. Auch eine Extrapolation von Höhensignalen ist möglich. Möglich ist es auch, dass eine Kurve durch die letzten Werte gelegt wird und das nächste Höhensignal entsprechend abgeschätzt wird.

Vorzugsweise wird ein aktueller Steigungswert des Weges abgeleitet. Eine Berechnung eines aktuellen Steigungswertes erfolgt insbesondere aus dem aktuellen Höhenwert und einem (oder mehreren) zeitlich vorhergehenden Höhenwert, wobei die Differenz der Höhenwerte durch die Zeitdifferenz der Messungen dividiert wird. Insbesondere wird ein Steigungswert durch den aktuellen Höhenwert und den unmittelbar zuvor abgeleiteten Höhenwert berechnet. Dabei kann eine Plausibilitätskontrolle erfolgen, um verrauschte oder durch Störungen verfälschte Messwerte bei der weiteren Berechnung nicht zu berücksichtigen.

Vorzugsweise wird ein Referenzsignal korrigiert, wenn sich der (insbesondere aus dem aktuellen Luftdrucksignal) ermittelte aktuelle Höhenwert von dem aktuellen Höhensignal um ein vorbestimmtes Maß unterscheidet. Ein vorbestimmtes Maß kann beispielsweise der halben oder einer ganzen (nativen) Auflösung des Satellitensensors und/oder des Satellitensystems entsprechen. Dadurch wird eine gleitende und zunehmende Differenz der Höhenwerte von dem aktuellen Höhensignal vermieden. Es kann der Vorteil der hohen Messauflösung von Luftdrucksignalen mit dem Vorteil der hohen Präzision von einem mit einem Satellitensensor ermittelten Höhensignal kombiniert werden.

Vorzugsweise werden Störsignale wie zum Beispiel durch vorbeifahrende Fahrzeuge oder Windböen hervorgerufene Störungen herausgefiltert. Das erfolgt durch eine Plausibilitätskontrolle und einen Vergleich mit den zuvor erfassten Werten. Eine Plausibilitätskontrolle kann z. B. über die ermittelte Steigung, die Geschwindigkeit des Fahrrads und die Beschleunigung erfolgen. Solche Störsignale können zwar die Höhenmessung stören, sind aber auch für die Bestimmung des CdA und Leistungsmessungen relevant, auch da sie den Fahrer beeinflussen.

Es ist bevorzugt, dass in Situationen, in denen ein Sensortyp z. B. nur gestörte oder keine Messwerte liefert oder liefern kann, wie z. B. ein Satellitensensor in einem Tunnel, weiterhin Werte ermittelt, gespeichert und gegebenenfalls angezeigt werden, z. B. auch durch Schätzung ermittelte Werte. Der Benutzer kann durch ein Symbol oder einen Hinweis auf eine entsprechende geringe Genauigkeit oder Zuverlässigkeit hingewiesen werden.

Es ist möglich und bevorzugt, dass wenigstens ein Geschwindigkeitssensor zum Erfassen einer Fahrgeschwindigkeit und/oder wenigstens ein Leistungssensor umfasst ist. Wenigstens ein Geschwindigkeitssensor kann beispielsweise an einem der Räder angeordnet sein. Ein Leistungssensor kann beispielsweise im Tretlager oder auch an den Pedalen oder an den Tretkurbeln oder an der Hinterradnabe angeordnet sein, die jeweils auch umfasst sein können.

Vorzugsweise wird auch ein Maß für den Rollwiderstand erfasst oder abgeschätzt und/oder berechnet.

In vorteilhaften Ausgestaltungen wird wenigstens ein aerodynamischer Luftwiderstandsbeiwert abgeleitet. Der aerodynamische Luftwiderstandsbeiwert kann insbesondere während der Fahrt (periodisch) ermittelt werden. Dadurch kann der Fahrer unterschiedliche Positionen einnehmen und die Auswirkung der einzelnen Positionen und Haltungen auf den Luftwiderstand verfolgen. Auch unterschiedliche Fahrradteile und/oder Ausrüstungsteile und z. B. Helme, Anzüge, Schuhe etc. können so getestet werden.

Vorzugsweise ist eine Frequenz zur Erfassung der Höhensignale von dem Satellitensystem größer als 1/40 Hz. Vorzugsweise ist die Frequenz größer als 1/20 Hertz und besonders bevorzugt größer als 1/15 Hz und kann z. B. 0,1 Hz betragen. Vorzugsweise ist die Frequenz zur Erfassung der Höhensignale von dem Satellitensystem kleiner als 50 Hz und insbesondere kleiner 1 Hz.

Vorzugsweise ist eine Frequenz zur Erfassung der Luftdrucksignale mit dem Luftdrucksensor größer als 1/5 Hz. Vorzugsweise ist die Frequenz größer als 1 Hertz und besonders bevorzugt größer als 5 Hz und insbesondere kleiner 25 kHz oder kleiner 10 kHz. In vorteilhaften Ausgestaltungen liegt die Frequenz zwischen 10 Hz und 2 kHz. Insbesondere liegt die Frequenz bei 50 Hertz (+/-20%).

In besonders bevorzugten Ausgestaltungen ist die Frequenz zur Erfassung der Luftdrucksignale mit dem Luftdrucksensor (erheblich) größer als die Frequenz zur Erfassung der Höhensignale von dem Satellitensystem. Das Verhältnis der Frequenz der Erfassung der Luftdrucksignale zur Frequenz der Erfassung der Höhensignale ist insbesondere größer als ein Faktor 2 und vorzugsweise größer als ein Faktor 4 und kann den Wert 8 und insbesondere 10 oder 100 erreichen oder übersteigen. Die Erfassung der Höhensignale von einem Satellitensystem erfordert meist mehr Energie als die Erfassung und Umrechnung der Luftdrucksignale des Luftdrucksensors. Auf diese Art kann Energie gespart werden und die Zweiradkomponente länger ohne Austausch der Batterie oder Aufladen genutzt werden.

Vorzugsweise sind die Erfassungszeitpunkte des Luftdrucksignals und des Höhensignals zur Ableitung eines Höhenwertes aufeinander abgestimmt und/oder werden synchronisiert. Der zeitliche Versatz zwischen Erfassung der Signale ist vorzugsweise kleiner als 1/4 oder 1/8 der (längeren) Periodenlänge (beider Messungen) und/oder kleiner als ein Streckenversatz des Fahrrads bei der Fahrt von 10 m und vorzugsweise kleiner als ein Streckenabstand von 1 m. Vorzugsweise wird die Frequenz so gewählt oder angepasst das der Streckenabstand kleiner 50 cm beträgt. Auch noch kleinere Werte sind möglich und bevorzugt.

In allen Ausgestaltungen ist es bevorzugt mit z. B. dem Luftdrucksignal Ausfälle des Satellitensignals zu kompensieren und gegebenenfalls umgekehrt. Zum Beispiel in Tunneln, wobei dort auch Störsignale zu berücksichtigen sind. Oder im (dichten) Wald, wo das Satellitensignal durch Bäume gestört werden kann. Oder auch in Städten, wo hohe Gebäude das empfangene Signal stören können.

Vorzugsweise hängt eine Frequenz zur Ableitung eines Höhenwertes (und insbesondere zur Erfassung der Luftdrucksignale und/oder der Höhensignale) von der Fahrgeschwindigkeit des Fahrrads ab. Vorzugsweise wird die Frequenz zur Ableitung eines Höhenwertes mit zunehmender Fahrgeschwindigkeit größer.

In vorteilhaften Weiterbildungen hängt eine Frequenz zur Ableitung eines Höhenwertes (und/oder zur Erfassung der Luftdrucksignale und/oder der Höhensignale) von der Steigung des Weges und/oder der Beschleunigung ab. Dadurch kann eine ausreichende Genauigkeit sichergestellt werden.

Eine erfindungsgemäße Zweiradkomponente umfasst eine Messeinrichtung zum Erfassen und Auswerten von Sensordaten bzw. sensorisch erfassten Daten beim Fahren eines wenigstens teilweise muskelbetriebenen Fahrrads auf einem Weg und insbesondere einer Straße, wobei die Messeinrichtung wenigstens zwei Sensoren umfasst oder wobei der Messeinrichtung wenigstens zwei Sensoren zugeordnet sind. Es ist wenigstens ein Luftdrucksensor zum Erfassen eines (charakteristischen) aktuellen Luftdrucksignals und wenigstens ein Satellitensensor zum Ableiten eines aktuellen Höhensignals von einem Satellitensystem umfasst. Weiterhin weist die Zweiradkomponente eine Steuereinrichtung und eine Recheneinrichtung auf, welche dazu ausgebildet und eingerichtet ist einen (verbesserten bzw. korrigierten) aktuellen Höhenwert aus dem (charakteristischen) aktuellen Luftdrucksignal unter Berücksichtigung des aktuellen Höhensignals zu berechnen.

Auch die erfindungsgemäße Zweiradkomponente hat viele Vorteile, da sie eine verbesserte Genauigkeit erlaubt.

Vorzugsweise ist die Recheneinrichtung dazu ausgebildet und eingerichtet, einen Steigungswert des Weges zu berechnen. Es ist bevorzugt, dass die Zweiradkomponente wenigstens einen Beschleunigungssensor umfasst. Die Steuereinrichtung dient zur Steuerung und kann die Recheneinrichtung umfassen.

Die Erfindung ermöglicht es auf vorteilhafte Weise, verbesserte Daten beim Fahren mit einem Fahrrad zu erfassen. Dadurch können Luftwiderstandsbeiwerte des Fahrrads inklusive Fahrer auch bei unterschiedlichen Sitzpositionen und Sitzhaltungen und Ausrüstungsteilen ermittelt werden.

Die absolute Höhe und auch Höhenänderungen beim Fahren können besser detektiert werden, da die Luftdrucksignale des Luftdrucksensors zur Erfassung des absoluten Umgebungsdrucks durch die periodisch erfassten Höhensignale von einem Satellitensystem kontrolliert werden können. Bei Bedarf und einer entsprechenden Abweichung kann eine entsprechende Korrektur erfolgen, sodass eine zunehmende Abweichung der Sensorwerte verhindert werden kann.

Es können an (bekannten) Positionen auch bekannte Höhenangaben eingegeben oder auch automatisch übertragen werden. Zum Beispiel zu Hause oder am Meer oder an gekennzeichneten oder bekannten Punkten, wie z. B. an Bergpässen.

Die Frequenzen, mit denen ein aktuelles Höhenmaß aus einem aktuellen charakteristischen Luftdrucksignal für einen Umgebungsdruck und mit denen ein aktuelles Höhensignal durch Erfassung von Daten von einem Satellitensystem erfasst werden, können gleich sein, sind aber vorzugsweise unterschiedlich.

Der Luftwiderstand ist eine wesentliche Kraft, gegen die ein Fahrradfahrer anarbeiten muss. Ein größerer Luftwiderstand führt dazu, dass der Fahrradfahrer mehr Energie aufwenden muss, um seine Geschwindigkeit zu behalten oder sogar zu vergrößern. Das ist besonders wichtig bei der Fahrt mit Rennrädern unter Wettkampfbedingungen. Dann müssen Fahrradfahrer sich ihre Energie über lange Entfernungen erhalten. Fahrradrennen können wegen einiger Sekunden gewonnen oder verloren werden.

Es ist deshalb aus Gründen der Energieeffizienz wichtig, den Luftwiderstand zu verringern. Das ist auch für teilweise oder vollständig angetriebene Elektrofahrräder wichtig, bei denen ein geringerer Luftwiderstand eine höhere Geschwindigkeit und/oder eine größere Reichweite und/oder eine geringere Batteriegröße ermöglicht. Die Ableitung eines Luftwiderstandsbeiwertes ist deshalb sehr vorteilhaft, um die Wettbewerbsfähigkeit und Effizienz eines Fahrradfahrers und seiner Ausrüstung zu verbessern.

Dabei ist die Messung des Luftwiderstandsbeiwertes stark abhängig von den Sensordaten und besonders von dem aktuellen Steigungswert.

Mit der vorliegenden Erfindung kann der aktuelle Steigungswert und Steigungswinkel aus der Höhenänderung mit hoher Genauigkeit berechnet werden. Die Höhenänderung wird wiederum durch Änderungen des Umgebungsdrucks festgestellt, welche mit wenigstens einem Luftdrucksensor erfasst wird.

Das erfindungsgemäße Verfahren ist nicht auf den Einsatz an einem wenigstens teilweise muskelbetriebenen Fahrrad beschränkt. Ebenso kann die erfindungsgemäße Zweiradkomponente auch an anderen Gegenständen als Fahrrädern eingesetzt werden.

Die Erfindung verwendet zwei oder mehr unterschiedliche Arten von Sensoren, um zum Beispiel eine aktuelle Höhe und/oder einen aktuellen Steigungswert oder Steigungswinkel der Straße genauer zu ermitteln. Durch die periodische Rekalibrierung des Luftdrucksensors wird über den gesamten Messzeitraum eine höhere Genauigkeit erzielt.

Weitere Vorteile und Merkmale ergeben sich aus den Ausführungsbeispielen, die im Folgenden mit Bezug auf die beiliegenden Figuren erläutert werden.

In den Figuren zeigen:
- Figur 1: eine schematische Seitenansicht eines Rennrades auf einer ansteigenden Straße mit einer erfindungsgemäßen Zweiradkomponente;
- Figur 2: eine Zweiradkomponente in einer schematischen Seitenansicht;
- Figur 3: eine geschnittene Prinzipskizze einer Zweiradkomponente;
- Figur 4: eine weitere geschnittene Prinzipskizze einer Zweiradkomponente;
- Figur 5: ein schematisches Detail einer Zweiradkomponente;
- Figur 6: eine perspektivische Darstellung einer Messsonde einer Zweiradkomponente;
- Figur 7: die Messsonde nach Figur 6 in einer Seitenansicht;
- Figur 8: Vorderansicht von Figur 6;
- Figur 9: einen Schnitt durch Figur 6;
- Figur 10: einen Verlauf des Druckkoeffizienten auf einer Oberfläche eines angeströmten Körpers;
- Figur 11: einen Verlauf des mit einer Zweiradkomponente gemessenen absoluten Umgebungsdrucks über der zum Fahrrad relativen Luftgeschwindigkeit; und
- Figur 12 bis 14: einen Höhenverlauf einer Straße über der Strecke und beim Fahren darauf gemessene Werte.

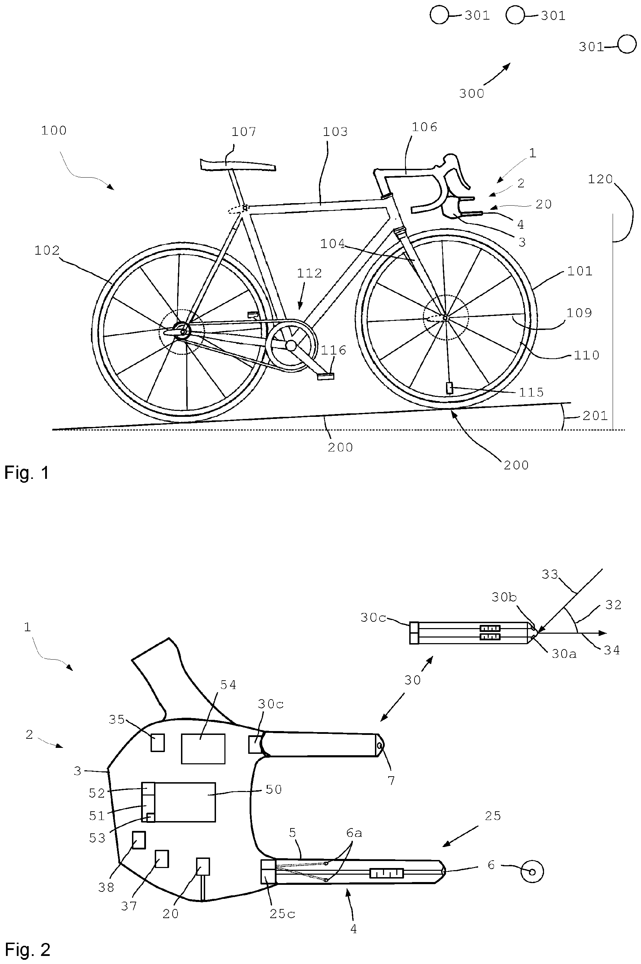

In Figur 1 ein Rennrad 100 dargestellt, die Erfindung kann auch bei einem Mountainbike eingesetzt werden. Das Rennrad 100 verfügt über ein Vorderrad 101 und ein Hinterrad 102. Die beiden Räder 101, 102 verfügen über Speichen 109 und eine Felge 110. Es können konventionelle Felgenbremsen oder auch andere Bremsen wie zum Beispiel Scheibenbremsen vorgesehen sein.

Ein Rad 100 verfügt über einen Rahmen 103, einen Lenker 106, einen Sattel 107 und eine Gabel. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe der Räder kann z. B. jeweils über eine Steckachse oder einen Schnellspanner an dem Rahmen befestigt sein.

Das in Figur 1 dargestellte Rennrad 100 fährt hier auf einem Weg bzw. einer Straße 200 bergauf. Der Steigungswinkel 201 zeigt die vorliegende Steigung an. Über einen oder mehrere Geschwindigkeitssensoren 115 wird die Fahrgeschwindigkeit des Rennrades 100 auf dem Weg 200 ermittelt. Die Geschwindigkeit kann über Speichensensoren oder auch im Laufrad selbst und/oder über Satellitensysteme ermittelt werden. Über Leistungs- oder Kraftsensoren 116 an den Pedalen und/oder über entsprechende Sensoren an der Tretkurbel und/oder an der Hinterradnabe wird die Antriebsleistung des Rennrades 100 berechnet.

An dem Lenker 106 und/oder der Gabel ist die Zweiradkomponente 1 mit der Messeinrichtung 2 mitlenkend befestigt. Die erfassten Daten können in der Zweiradkomponente 1 bzw. der Messeinrichtung 2 der Zweiradkomponente 1 oder in einem separaten (Fahrrad-) Computer ausgewertet, gespeichert und verarbeitet werden.

Die Zweiradkomponente 1 umfasst eine Messeinrichtung 2 und ein Gehäuse 3, an dem eine oder mehrere Messsonden 4 angeordnet sind. Die Messsonde 4 kann als Pitot-Rohr ausgebildet sein und ein Maß für den Staudruck an dem vorderen Ende der Messsonde 4 bzw. dem Sondenkörper 5 erfassen. Durch eine innere Luftführung kann der Totaldruck einem Luftdrucksensor zugeleitet und dort erfasst werden. Durch Berücksichtigung des Umgebungsdrucks kann der Staudruck abgeleitet werden. Vorzugsweise wird ein Differenzdrucksensor eingesetzt, der eine Druckdifferenz zwischen dem Totaldruck am vorderen Ende und einem seitlichen lokalen statischen Druck (lokaler Umgebungsdruck) an der Messsonde 4 erfasst. Möglich ist es auch, dass zwei Absolutdrucksensoren eingesetzt werden und deren Differenz ermittelt wird, um den Staudruck zu berechnen.

Figur 2 zeigt eine vergrößerte Darstellung der Zweiradkomponente 1 aus Figur 1 und zeigt schematisch einige Komponenten bzw. Teile der Zweiradkomponente 1. Die Zweiradkomponente 1 weist eine Messeinrichtung 2 auf. In Fahrtrichtung gesehen ist am vorderen Ende der Zweiradkomponente 1 die Messsonde 4 mit dem Sondenkörper 5 angeordnet, um den Staudruck am vorderen Ende der Zweiradkomponente 1 und somit nahe dem vorderen Ende des Fahrrads 100 zu erfassen. Durch die Positionierung im vorderen Bereich wird eine mögliche Beeinflussung durch weitere Komponenten des Rennrades 100 im Wesentlichen vermieden.

Der Sondenkörper 5 weist am vorderen Ende die äußere Öffnung 6 auf. Die Öffnung 6 ist über eine später noch ausführlicher beschriebene Luftführung 10 im Inneren des Sondenkörpers 5 mit dem hier schematisch dargestellten Staudrucksensorsystem 25 verbunden. Eine Vorderansicht ist schematisch rechts neben der eigentlichen Zweiradkomponente abgebildet. Der runde Sondenkörper 5 mit der zentralen vorderen Öffnung 6 ist erkennbar.

Der Sondenkörper 5 der Messsonde 4 ist länglich geformt und über den wesentlichen Teil der Länge etwa zylindrisch ausgebildet. Beabstandet vom vorderen Ende und hier etwa in einem mittleren Abschnitt ist auf dem Umfang wenigstens ein Loch 6a ausgebildet. Hier ist das Loch 6a auf der Seitenwand des Sondenkörpers 5 mit dem Staudrucksensorsystem 25 verbunden. Ebenso ist die zentrale vordere Öffnung 6 mit dem Staudrucksensorsystem 25 verbunden.

Das Staudrucksensorsystem 25 umfasst hier einen Differenzdrucksensor 25c, der einen Differenzdruck zwischen den Öffnungen 6 und 6a erfasst. Dadurch wird ein dynamischer Differenzdruck erfasst, aus dem ein Staudruckwert bzw. Luftdruckwert abgeleitet wird. Über die Öffnungen 6a wird ein Wert für den lokalen statischen Druck erfasst, während über die Öffnung 6 der Totaldruck bei der Fahrt erfasst wird. Der Differenzdruck, der mit dem Differenzdrucksensor 25c des Staudrucksensorsystems 25 ermittelt wird, ist ein Maß für die relative Luftgeschwindigkeit, die frontal auf den Sondenkörper einströmt.

Hier sind vorzugsweise auf dem Umfang gleichmäßig mehrere Öffnungen 6a angeordnet, die innerhalb des Sondenkörpers 5 miteinander verbunden sind und somit einen statischen Durchschnittsdruck erfassen. In Figur 2 sind beispielhaft zwei Öffnungen 6a zu erkennen, die hier jeweils etwas oberhalb und etwa unterhalb der Mittellinie angeordnet sind. Die Öffnungen 6a können im Längsabschnitt der Öffnungen 6a miteinander verbunden sein oder über separate Kanäle mit dem Differenzdrucksensor 25c verbunden sein. Es können (symmetrisch verteilt) zwei oder mehr und insbesondere drei, vier, fünf, sechs, sieben oder auch acht oder mehr Öffnungen 6a auf dem Umfang verteilt angeordnet sein.

Im Inneren des Sondenkörpers 5 sind insbesondere an allen Kanälen die angedeuteten Kanäle ausgebildet, die das Eindringen von Wasser bis zu dem Sensor verhindern.

Die Zweiradkomponente 1 umfasst des Weiteren einen Luftdrucksensor 20 zur Erfassung des Umgebungsdrucks. Der Luftdrucksensor 20 zur Erfassung des Umgebungsdrucks kann an verschiedenen Stellen der Messeinrichtung 2 angeordnet sein. Jedenfalls sollte der Luftdrucksensor 20 nicht gleichfalls den Totaldruck erfassen, den der Staudrucksensor 25 an der vorderen Spitze der Messeinrichtung 2 erfasst.

Beispielsweise kann der Luftdrucksensor 20 zu Erfassung des Umgebungsdrucks (auch Absolutdrucksensor genannt) innerhalb des Gehäuses 3 und dort in einem unteren Bereich des Gehäuses 3 oder auch im hinteren Bereich des Gehäuses 3 angeordnet sein. Möglich ist es auch, dass der Luftdrucksensor 20 zur Erfassung des Umgebungsdrucks auf einer Seitenfläche oder an der Unterseite des Gehäuses 3 angeordnet ist oder eine Mündungsfläche aufweist. Jedenfalls wird mit dem Luftdrucksensor 20 ein Luftdrucksignal 21 für den Umgebungsdruck erfasst und nicht irgendein anderer Druck, der zwischen dem Totaldruck und dem Umgebungsdruck liegen könnte.

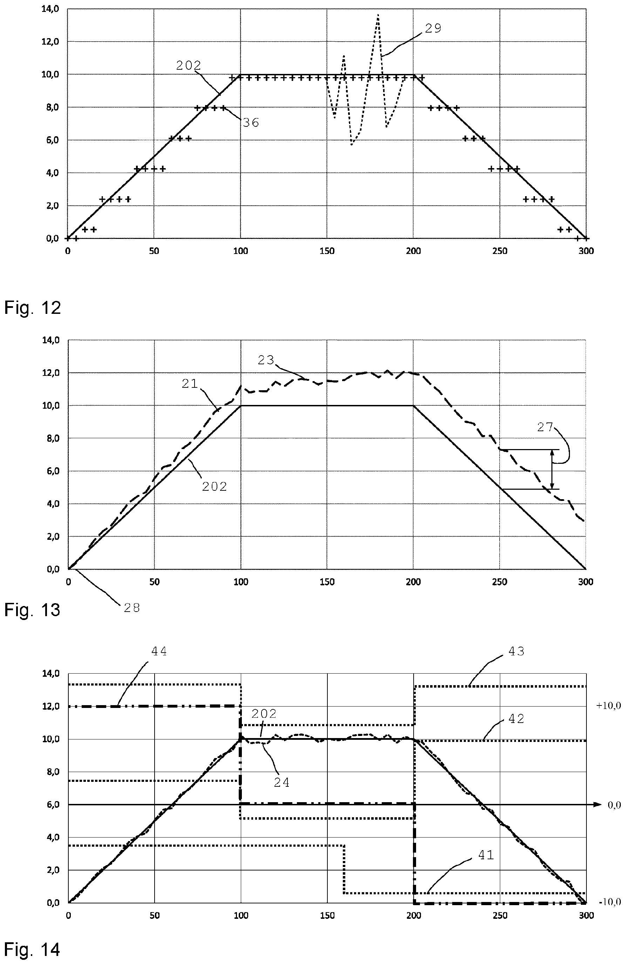

Die in Figur 2 dargestellt Zweiradkomponente 1 umfasst weiterhin ein Satellitensensor 35, mit dem von einem Satellitensystem 300 bzw. dessen Satelliten 301 (vergleiche Figur 1) Signale empfangbar sind, um daraus auf bekannte Art und Weise ein Höhensignal 36 (Figur 12) abzuleiten. Ein Feuchte- und/oder Temperatursensor 37 kann zu Bestimmung der Luftfeuchte und/oder Lufttemperatur vorhanden sein und auch zur Berechnung der Luftdichte der Umgebungsluft eingesetzt werden. Ein Beschleunigungssensor 38 dient zur Erfassung der Beschleunigungen des Rennrades 100.

Über eine Recheneinrichtung 50, die einen Speicher 51 und eine Datenschnittstelle und insbesondere eine Netzwerkschnittstelle 52 umfasst, können die aufgenommenen Daten verarbeitet, gespeichert und gegebenenfalls zu entfernten Gegenstellen übertragen werden. Die Datenschnittstelle kann auch eine Antenne zur Aufnahme und/oder Abgabe von Signalen umfassen. Darüber können Daten gegebenenfalls über Funk übertragen werden.

Als Energiequelle 54 kann eine Batterie oder ein Akku oder ein sonstiger Energiespeicher verwendet werden, der die benötigte Energie für die Sensoren, den Speicher und die Recheneinrichtung zur Verfügung stellt. Es kann auch eine Energieversorgung über das Zweirad erfolgen.

Ein Giersensor 30 weist hier einen Differenzdrucksensor 30c auf, der den Differenzdruck an den zwei Öffnungen 30a und 30b erfasst, die am vorderen Ende der Gierwinkelsonde angeordnet sind. Die Gierwinkelsonde ist am vorderen Ende mit zwei zueinander gewinkelt Flächen (insbesondere senkrecht zum Boden) ausgebildet, die hier unter einem Winkel von 90° zueinander ausgerichtet sind, und weist die zwei Öffnungen 30a und 30b auf. Aus den Messwerten wird ein Gierwinkel 32 abgeleitet.

Das Giersensorsystem weist einen ähnlichen Sondenkörper auf wie der des Staudrucksensorsystems 25. Im Inneren des Sondenkörpers des Giersensorsystems 30 sind zwei separate Luftführungen ausgebildet. An der vorderen Spitze sind gewinkelt zueinander zwei Öffnungen 30a, 30b vorgesehen, die insbesondere mit einem Differenzdrucksensor 30c oder separaten Drucksensoren verbunden sind, um einen Differenzdruck abzuleiten.

Um einen Überblick zu erleichtern, ist in der rechten Hälfte von Figur 2 eine Draufsicht auf den Sondenkörper des Giersensors 30 abgebildet, aus der erkennbar ist, das die Öffnungen 30a, 30b des Differenzdrucksensors 30c gewinkelt zueinander ausgerichtet sind.

Damit ist es möglich, aus der Fahrgeschwindigkeit 34 und den erfassten Werten die Windrichtung und die Windgeschwindigkeit 33 relativ zur Bewegung des Zweirades 100 zu ermitteln. Diese Windrichtung und Windgeschwindigkeit 33 entspricht dem Fahrtwind, dem der Fahrer unter dem Gierwinkel 32 ausgesetzt ist.

Möglich ist es auch, zwei oder gegebenenfalls auch mehrere Flächen zu haben, auf denen der Luftdruck gemessen wird, vorzusehen, die z. B. gewinkelt zueinander angeordnet sind, um aus den Differenzen der Messwerte einen Gierwinkel 32 abzuleiten.

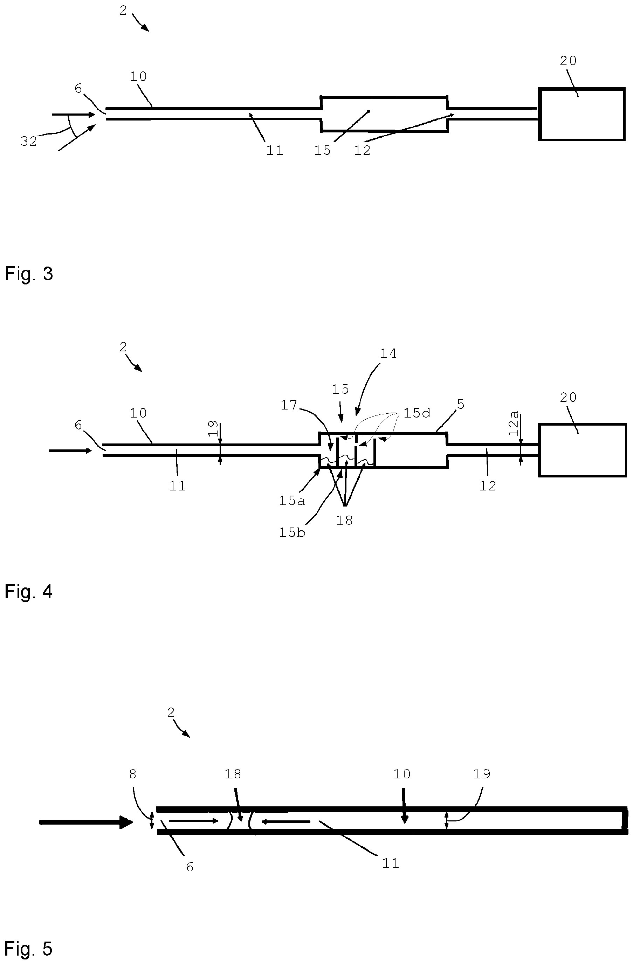

In den Figuren 3 bis 5 sind schematische Darstellungen einer Zweiradkomponente 1 bzw. einer Messeinrichtung 2 mit einer Messsonde 4 abgebildet. Figur 3 zeigt ein einfaches Beispiel einer Messsonde 4, wobei eine der Luftführungen 10 anschaulich dargestellt ist.

Der Übersichtlichkeit halber ist jeweils nur eine Luftführung 10 eingezeichnet, obwohl das Giersensorsystem 25 oder das Staudrucksensorsystem 30 zur Erfassung des Staudrucks vorzugsweise jeweils Differenzdrucksensoren und zwei oder mehr separate Luftführungen 10 umfassen. Verschiedene Luftführungen 10 sind innerhalb eines Sondenkörpers voneinander getrennt und weisen jeweils separate Kammern 15 und/oder Teilkammern und gegebenenfalls Zwischenwände 15c auf, um das Eindringen von Wasser und/oder Schmutz bis zu dem Drucksensor oder Differenzdrucksensor zu verhindern.

Am vorderen Ende des Sondenkörpers 5 ist die äußere Öffnung 6 ausgebildet, an die sich die Luftführung 10 und zunächst der Luftkanal 11 als Zufuhrkanal anschließt. Der Luftkanal 11 führt bis zu der Kammer 15, die einen Aufnahmeraum für eventuell eingedrungenes Wasser bereitstellt. Ein typischer Durchmesser 19 des Luftkanals 11 beträgt in einer bevorzugten Ausgestaltung etwa 1 mm (+/-20%). Schon durch den geringen Durchmesser bedingt, kann nur sehr wenig Wasser eindringen.

Am rückwärtigen Ende der Kammer 15 schließt sich der Luftkanal 12 an, der als Sensorkanal ausgebildet ist und bis zum Luftdrucksensor 20 führt. Auch der typische Durchmesser 12a des Sensorkanals 12 beträgt hier in einer bevorzugten Ausgestaltung etwa 1 mm (+/-20%). Durch den Aufbau der Luftführung 10 und den geringen Durchmesser der Luft- und Sensorkanäle bedingt. wird ein zuverlässiger Schutz des Luftdrucksensors 20 vor eindringendem Wasser gewährleistet.

Zum Schutz vor dem Eintritt von Wasser trägt auch bei, dass die äußere Öffnung 6 des Luftkanals 11 eine Abmessung bzw. einen (im Vergleich zum Durchmesser der Luftkanals 11 noch etwas kleineren) Durchmesser 8 aufweist. Der Durchmesser 8 ist hier etwa 20% kleiner als der typische Durchmesser 19 des Luftkanals 11. Durch eine nochmals kleinere äußere Öffnung 8 wird ein noch besserer Schutz vor dem Eindringen von Wasser erreicht.

Dadurch kann auf thermische Maßnahmen wie eine Beheizung des Sondenkörpers 5 verzichtet werden. Das Innere bleibt im Betrieb weitestgehend von Wasser frei. Auf das äußere Reinigen des Fahrrads mit einem Hochdruckreiniger sollte aber wenigstens im Bereich des Sondenkörpers 5 dennoch verzichtet werden.

Zunächst müsste der in der Kammer 15 ausgebildete Aufnahmeraum mit Wasser gefüllt werden, bevor danach Wasser in den Sensorkanal 12 eindringt. Aufgrund der geringen Abmessungen und der Oberflächenspannung von Wasser bildet eindringendes Wasser dort einen Pfropfen, der den Kanal dicht abschließt und damit die sich dahinter befindliche Luftmenge in dem Sensorkanal 12 einschließt. Damit das Wasser weiter in den Sensorkanal 12 eindringt, muss deshalb das eingeschlossene Luftvolumen komprimiert werden, was dem eingedrungenen Wasser eine entsprechende Gegenkraft entgegensetzt. Dadurch wird das Eindringen von Wasser bis zu dem Luftdrucksensor 20 weitestgehend vermieden.

In entsprechender Weise wie in den Figuren 3 bis 9 dargestellt, können die Sensoren 25, 30 angepasst ausgebildet sein.

Figur 4 zeigt eine Variante, bei der die innere Kammer 15 in mehreren Teilkammern 15a, 15b etc. aufgeteilt ist. Dazu sind hier Zwischenwände 15c vorhanden, die die Kammer 15 in die Teilkammern aufteilt.

In den Teilkammern 15a, 15b sind jeweils Aufnahmeräume 17 ausgebildet, in denen sich jeweils eingedrungenes Wasser 18 sammeln kann.

In den Zwischenwänden 14 der Kammer 15 sind Verbindungsöffnungen 15d ausgebildet, die die Teilkammern 15a, 15b etc. nacheinander und (wie Perlen auf einer Schnur) miteinander verbinden. Die Verbindungsöffnungen sind vom Boden der jeweiligen Kammern bzw. Teilkammern beabstandet angeordnet, um entsprechende Aufnahmeräume zu Verfügung zu stellen. In den Zwischenwänden sind Verbindungsöffnungen so angeordnet, dass diese nicht miteinander fluchten, sondern seitlich und/oder in der Höhe zueinander versetzt angeordnet sind. Dabei ist vorzugsweise jede einzelne Verbindungsöffnung aber vom Boden des jeweiligen Aufnahmeraums beabstandet angeordnet.

Insgesamt entstehen dadurch zwei oder mehr miteinander verbundene Kammern oder Teilkammern und mit der entsprechenden Luftführung dazwischen eine Art von Labyrinthdichtung 14, die besonders zuverlässig den Luftdrucksensor 20 vor eindringendem Wasser schützt. Die Luftführung kann im Zuge von Wartungsarbeiten oder nach jeder Fahrt vollständig oder teilweise gereinigt werden. Beispielsweise kann die Messsonde 4 demontiert und durchgespült und getrocknet und/oder mit (insbesondere ölfreier) Druckluft ausgeblasen werden.

Figur 5 zeigt einen Abschnitt eines Luftkanals 11, 12 oder 13, wobei ein Wassertropfen 18 in den Luftkanal beispielhaft eingezeichnet ist. Im Inneren weisen die Luftkanäle einen Durchmesser bzw. Querschnitt 19 auf. Der Durchmesser 19 beträgt insbesondere zwischen 0,5 mm und 2 mm. Hier im konkreten Beispiel liegt der lichte Durchmesser 19 bei 1 mm. Die äußere Öffnung 6 weist eine Abmessung 8 auf, die vorzugsweise geringer ist als der lichte Durchmesser 19. Hier liegt der Durchmesser 8 der äußeren Öffnung bei vorzugsweise 0,8 mm.

Die Abmessungen 8 und 19 sind so aufeinander und die Eigenschaften von Wasser abgestimmt, dass eingedrungenes Wasser im Inneren eines Luftkanals einen Wasserpfropfen 18 bildet, wie es in Figur 5 eingezeichnet ist. Der Pfropfen kann nur soweit in den Kanal eindringen, bis ein Gleichgewicht der durch das komprimierte Luftvolumen erzeugten Kraft und der durch den Totaldruck hervorgerufenen Kraft vorliegt. Die geringeren Durchmesser tragen erheblich zur Abdichtung bei.

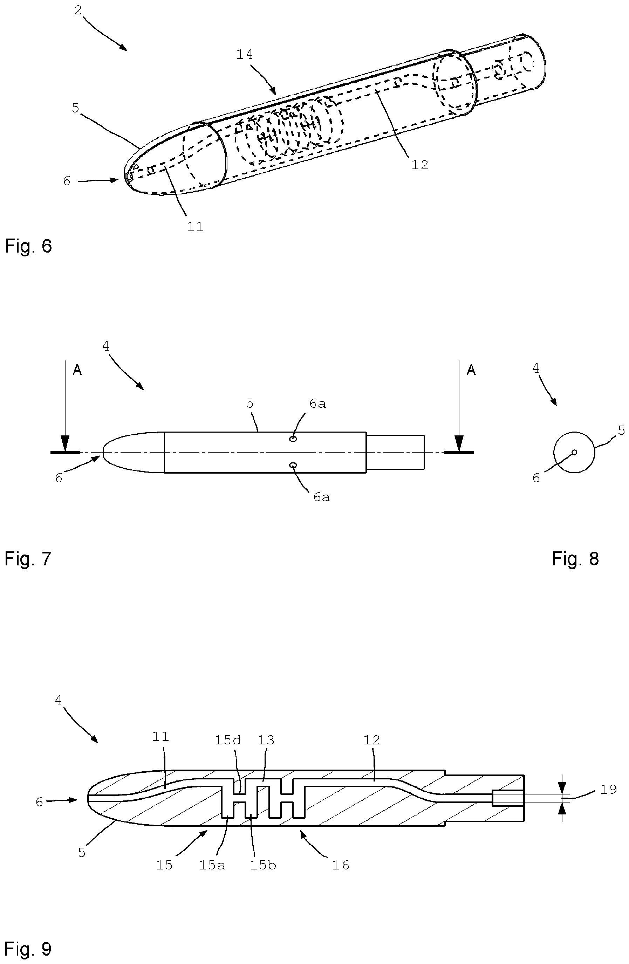

In den Figuren 6 bis 9 ist ein konkreteres Ausführungsbeispiel der Messsonde 4 mit einem Sondenkörper 5 dargestellt. Figur 6 zeigt dabei eine perspektivische Darstellung, wobei eine der Luftführungen 10 im Inneren des Sondenkörpers 5 gestrichelt eingezeichnet ist, um einen schematischen Überblick zu geben. Am vorderen Ende ist die äußere Öffnung 6 an der Spitze des Sondenkörpers 5 ausgebildet. Es schließt sich der Zufuhrkanal 11 als Luftkanal an. In einem zentralen Bereich ist eine Labyrinthdichtung 14 umfasst, die sich im hinteren Bereich des Sensorkanals 12 als Luftkanal anschließt.

Figur 7 zeigt eine Seitenansicht und Figur 8 den Schnitt A - A aus Figur 7. In Figur 7 sind zwei der hier z. B. insgesamt vier Öffnungen 6a (möglich sind auch drei oder fünf oder sechs oder mehr Öffnungen) auf dem seitlichen Umfang des Sondenkörpers 5 eingezeichnet, über die der statische Druck aufgenommen wird. Am hinteren Ende des des Sondenkörpers 5 wird dann vorzugsweise ein Differenzdrucksensor angeordnet, der einen Differenzdruck des Totaldrucks und des über dem Umfang des Sondenkörpers 5 gemittelten lokalen statischen Drucks (lokaler über den Umfang des Sondenkörpers gemittelter Umgebungsdruck) erfasst. Möglich ist es auch, zwei separate Luftdrucksensoren einzusetzen, die zur Bestimmung des Staudrucks eingesetzt werden.

In Figur 8 ist an der vorderen Spitze die Öffnung 6 zu erkennen.

Figur 9 zeigt einen Querschnitt durch den Sondenkörper 5, wobei hier erkennbar ist, dass im Inneren des Sondenkörpers 5 die Luftführung 10 verläuft und hier zwei Kammern 15,16 umfasst, die jeweils Teilkammern 15a und 15b aufweisen, insgesamt also hier vier (Teil-) Kammern. Im Querschnitt ist jede der Kammern 15, 16 etwa "H"-artig geformt, wobei die Zufuhr durch den Zufuhrkanal 11 am oberen Ende des "H" erfolgt. Auch die Verbindungen zu der zweiten Kammer 16 und dem Sensorkanal 12 starten jeweils am oberen Ende der Kammern 15, 16. Die Teilkammern 15a, 15b sind in einem mittleren bis oberen Bereich über eine Verbindungsöffnung 15d miteinander verbunden. Hier kann eine solche Verbindungsöffnung 15d auch als Zwischenkanal bezeichnet werden. Durch die Konstruktion können die unteren Schenkel der "H"-förmigen Kammern 15, 16 jeweils als Aufnahmeräume für eventuell eingedrungenes Wasser 18 eingesetzt werden.

Der Giersensor 30 ist entsprechend aufgebaut und umfasst einen Sondenkörper mit zwei Öffnungen und zwei Luftführungen und vorzugsweise einem Differenzdrucksensor 30c oder zwei Drucksensoren, um einen Wert für den Differenzdruck zu ermitteln..

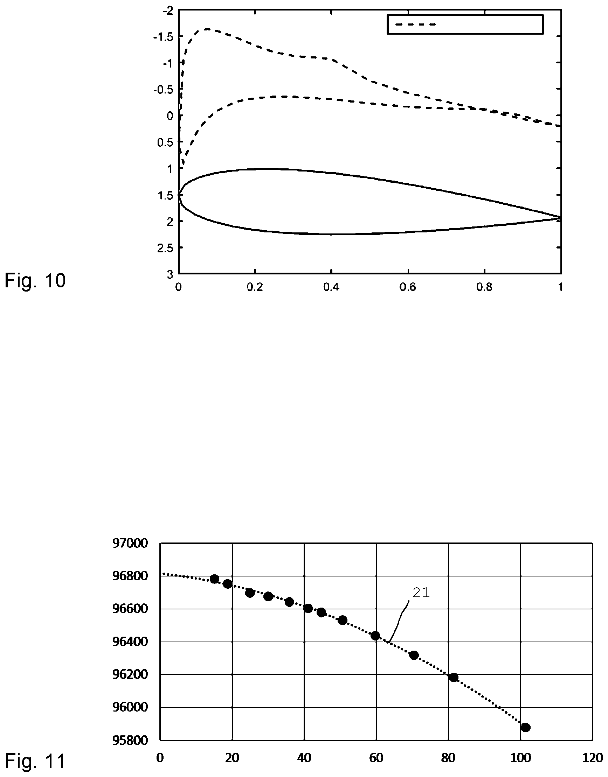

Figur 10 zeigt ein Diagramm mit der Druckverteilung um die Oberfläche eines Objektes herum, wenn auf das Objekt von vorne Luft einströmt. Figur 10 zeigt zwar einen Schnitt durch eine Tragfläche, aber grundsätzlich hängt auch bei anderen Objekten der Druck auf eine Oberfläche von dem Anströmwinkel und den Eigenschaften des Objektes ab. Während das Objekt hier mit einer durchgezogenen Linie eingezeichnet ist, ist der Druckkoeffizient gestrichelt eingezeichnet, der repräsentativ für den auf die Oberfläche des Objektes lokal einwirkenden Druck ist.

Aus Figur 10 ergibt sich in an sich bekannterweise, dass der lokale Druck auf die Oberfläche eines Objektes von der Position auf der Oberfläche des Objektes abhängt. Damit kann der lokale Druck größer oder kleiner als der normale Umgebungsdruck in Ruhe sein (und hängt auch noch von der Luftgeschwindigkeit ab).

Die Positionsabhängigkeit ist ein Problem, wenn mit einem sich relativ zu der Umgebungsluft bewegenden Fahrzeug - wie einem Fahrrad - ein Umgebungsdruck erfasst werden soll. Selbst im Inneren eines Objektes herrscht nicht der normale Umgebungsdruck vor, sondern wird durch die Fahrgeschwindigkeit, die Windgeschwindigkeit, die Windrichtung und auch durch die Konstruktion des Objektes beeinflusst.

Soll an einem Fahrrad einen Luftwiderstandsbeiwert ermittelt werden, müssen die nötigen Sensorwerte möglichst exakt erfasst werden. Dazu ist es von großem Vorteil, wenn die Steigung eines Weges und/oder auch die Windrichtung möglichst genau erfasst werden.

Figur 11 zeigt beispielhaft den mit einer Zweiradkomponente 1 direkt mit dem Luftdrucksensor 20 gemessenen "Umgebungsdruck" über der Luftgeschwindigkeit bzw. der Relativgeschwindigkeit des Fahrrads zum Wind. Dabei wird der Druck in Newton pro Quadratmeter (N/m2 bzw. Pa) über der Geschwindigkeit in Stundenkilometer aufgetragen. Es zeigt sich in diesem konkreten Fall, dass der Verlauf der bei tatsächlich gleichem Umgebungsdruck gemessenen Luftdrucksignale 21 stark von der Relativgeschwindigkeit abhängt. Mit zunehmender Luftgeschwindigkeit wird das gemessene Luftdrucksignal 21 kleiner. Der Unterschied im dargestellten Geschwindigkeitsbereich von 0 bis 100 km/h beträgt hier etwa 10 mbar bzw. 1000 Pa.

Der konkrete Verlauf hängt von der Anordnung des Luftdrucksensors zur Messung des Umgebungsdrucks, von der genauen Ausgestaltung der Messeinrichtung bzw. der Zweiradkomponente 1 und auch von der Windrichtung ab. Der Effekt kann aber unabhängig von einer gewählten Position nicht grundsätzlich vermieden werden. Auch wenn, wie hier, der Luftdrucksensor 20 für den Umgebungsdruck innerhalb des Gehäuses 3 angeordnet wird, kann es aufgrund von relativem Fahrtwind und relativer Richtung der Luft zu Beeinträchtigungen der Messqualität kommen. Es können dynamische Effekte auftreten, die den gemessenen Wert erhöhen oder verringern. Die Luft kann sich vor dem Eingang zum Sensor aufstauen oder durch einen Bernoulli-Effekt kann der gemessene Druckwert 21 kleiner sein, als der echte Umgebungsdruck.

Die Zweiradkomponente 1 umfasst im Speicher 51 der Recheneinrichtung Kalibrierdaten 53, mit denen das zunächst mit einem Luftdrucksensor 20 erfasste Luftdrucksignal 21 aufgrund von Messdaten oder Erfahrungsdaten korrigiert werden kann. Die Verwendung der mit dem Staudrucksensorsystem 25 erfassten Staudruckwerte 26 ist sehr vorteilhaft. Das Ergebnis kann unter Berücksichtigung des mit dem Gier-Sensor 30 erfassten Gierwinkels 32 nochmals verbessert werden.

Damit wird eine erheblich verbesserte Bestimmung der aktuellen Höhe des Rennrades 100 ermöglicht und es kann die Steigung bzw. der Steigungswinkel 201 eines Weges 200 mit erheblich verbesserter Genauigkeit abgeleitet werden.

Da der Neigungswinkel bzw. die Steigung oder das Gefälle eines Weges einen erheblichen Einfluss auf die benötigte Antriebsleistung hat, kann somit auch ein Luftwiderstandsbeiwert mit erheblich verbesserter Genauigkeit vermittelt werden. Eine negative Steigung wird meist Gefälle genannt. Auch bei einem Gefälle hat der Luftwiderstandsbeiwert einen großen Einfluss.

Weiterhin hat auch der Rollwiderstand Einfluss auf die benötigte Leistung. Dazu können weitere Messwerte aufgenommen und analysiert werden oder es wird auf zuvor erfasste Werte zurückgegriffen. Der Rollwiderstand wird durch die verwendeten Reifen, den Reifenluftdruck, das Gewicht des Fahrrads und des Fahrers und die Fahrbahnbeschaffenheit beeinflusst und kann ermittelt, berechnet und/oder abgeschätzt werden.

Zur Aufnahme entsprechender Kalibrierdaten 53 können entweder im Windkanal oder auf geeigneten Straßen bei geeigneten Umgebungs- und Windbedingungen entsprechende Daten erfasst und ausgewertet werden. Die Kalibrierdaten 53 können anschließend im normalen Betrieb verwendet werden, um die Genauigkeit der Messergebnisse und der abgeleiteten Werte zu vergrößern. Die Kalibrierdaten 53 für die Kalibriermatrix werden entweder aus Tests im Windkanal oder aus Fahrversuchen ohne Höhenänderung in einem Bereich von Luftgeschwindigkeiten und Gierwinkeln abgeleitet.

Die Figuren 12 bis 14 zeigen den Höhenverlauf eines Weges 200 über der Strecke und beim Fahren darauf gemessene und abgeleitete Werte.

In Figur 12 zeigt die durchgezogene Linie den tatsächlichen Höhenverlauf 202 des Weges 200 in Metern (relativ zum Ausgangspunkt) über der dargestellten Länge in Metern dar. Mit Kreuzen markiert gekennzeichnet sind einzelne Messpunkte, die während der Fahrt über die dargestellte Strecke ermittelt und aufgezeichnet wurden. Die eingezeichneten Messwerte sind Höhensignale 36, die durch einen Satellitensensor 35 ermittelt wurden.

Beispielsweise kann dazu ein GPS-Sensor oder ein sonstiger Satellitensensor 35 eines globalen Navigationssatellitensystems (englisch: "global navigation satellite system" oder GNSS) eingesetzt werden. Möglich sind auch Systeme mit Pseudosatelliten, die ein lokales Satellitensystem zur Verfügung stellen und eine entsprechende Triangulation der Höhe und/oder Position erlauben.

Deutlich erkennbar ist die hohe Genauigkeit des Satellitensensors 35 und der Höhensignale 36. Es ist aber auch direkt erkennbar, dass die Auflösung der Höhensignale 36 des Satellitensensors 35 relativ grob ist. Hier wird jeweils ein Höhenunterschied von knapp 2 m erkannt. Eine Auflösung von 2 m reicht für die Berechnung einer Steigung zur Bestimmung eines Luftwiderstandsbeiwertes beim Betrieb von Fahrrädern nicht aus.

Deshalb werden bei alleiniger Verwendung von Satellitensensoren 35 zur Ermittlung einer lokalen Steigung keine befriedigenden Ergebnisse erzielt, wenn daraus beispielsweise ein Luftwiderstandsbeiwert errechnet werden soll. Auch eine Interpolation zwischen den einzelnen Messwerten bringt nicht die benötigte Genauigkeit, da sich der Höhenverlauf vieler Wege erheblich von der hier dargestellten besonders einfachen Teststrecke unterscheidet. So kann sich die Steigung lokal schon auf einem Meter oder auf wenigen Metern erheblich ändern.

In Figur 12 ist zusätzlich noch der Verlauf des gemessenen Umgebungsdrucks bei einem Störereignis gestrichelt eingezeichnet.

Beispielsweise können solche Störsignale 29 bei einem vorbeifahrenden Fahrzeug und insbesondere einem vorbeifahrenden Lastkraftwagen auftreten. Dabei weicht der gemessene Umgebungsdruck und die daraus berechnete Höhe erheblich von der tatsächlichen Höhe ab. Solche Ereignisse können über eine interne Filterung herausgerechnet werden. Dabei werden vorausgehende und folgende Werte erfasst und berücksichtigt und mit der Höhenbestimmung über GPS verrechnet. Der typische Verlauf mit sich abwechselnden Druckspitzen und Druckminima erleichtert die Filterung. Über die Filterung können so auch Fehlberechnungen der Windrichtung und der Windgeschwindigkeit vermieden werden.

Figur 13 zeigt die gleiche Strecke wie Figur 12, wobei einerseits wiederum der tatsächliche Höhenverlauf 202 der Teststrecke und andererseits ein über ein Luftdrucksignal 21 eines Luftdrucksensors 20 abgeleitetes Höhenprofil eingezeichnet ist.

Am Anfang wird ein Referenzwert 28 aufgenommen, der dann zur Bestimmung einer Höhendifferenz verwendet wird. Erkennbar ist, dass zu Beginn der Messung der über den Luftdrucksensoren gemessene Verlauf mit dem tatsächlichen Höhenverlauf 202 sehr gut übereinstimmt. Bei etwa der Mitte beträgt der Unterschied der Höhe beim Wert 23 schon fast 2 m.

Mit zunehmender Strecke ergibt sich aber ein systematischer Versatz bzw. ein Auseinanderlaufen des mit dem Luftdrucksensor 20 gemessenen Höhenverlaufs mit dem tatsächlichen Höhenverlauf 202. Das liegt daran, dass der Luftdrucksensor 20 nicht die Höhe direkt, sondern ein Maß für den Umgebungsdruck erfasst. Der absolute Umgebungsdruck hängt zwar auch von der Höhe ab, kann sich aber auch z. B. wetterbedingt ändern. Fällt nun der Luftdruck beim Fahren auf der Strecke oder steigt der Luftdruck währenddessen an, so können die damit bestimmten Werte auseinanderdriften. Das zeigt hier beispielhaft der Wert 27. Auch hier ist wieder das Ergebnis, dass die Werte nicht so genau sind, um einen hochqualitativen Luftwiderstandsbeiwert zu ermitteln.

Dazu ist eine höhere Genauigkeit der Höhenerfassung sinnvoll.

Figur 14 zeigt schließlich einerseits wiederum den tatsächlichen Höhenverlauf 202 der Teststrecke und andererseits einen über die verschiedenen Sensoren bzw. mit den Messergebnissen der verschiedenen Sensoren korrigierten Verlauf der Höhenwerte 24.

Dazu werden die Luftdrucksignale 21 des im Inneren des Gehäuses 3 der Messeinrichtung 2 angeordneten Luftdrucksensor 20 mittels der mit dem Staudrucksensorsystem 25 erfassten Staudruckwerte 26 und der mit den Giersensor 30 erfassten Gierwinkelwerte 31 und gemäß der Kalibrierdaten 52 nach dem grundsätzlichen Prinzip der Darstellung von Figur 11 korrigiert, um ein weitestgehend korrektes Maß für den jeweiligen Höhenwert 24 zu erhalten.

Außerdem wird zusätzlich zur Erfassung von den Luftdrucksignalen 21 zur Bestimmung von Höhenmaßen auch der Satellitensensor 35 eingesetzt. In periodischen Intervallen wird der hochgenaue Satellitensensor 35 eingesetzt, um einen Vergleichswert zu erhalten. Weicht der über die verschiedenen Luftdrucksensoren 20, 25 und 30 ermittelte Höhenwert 24 von dem Höhensignal 36 des Satellitensensors 35 signifikant ab, wird ein neues Referenzsignal 28 abgeleitet, wodurch sich mit dem entsprechenden Luftdrucksignal 21 ein zutreffend korrigierter Höhenwert 24 ergibt. Um eine Rekalibrierung aufgrund von verrauschten Messwerten zu vermeiden, wird nur korrigiert, wenn sich Differenzen über einen signifikanten Zeitraum ergeben.

Über dieses Verfahren werden die Vorteile der hohen Genauigkeit von Satellitensensoren 35 mit den Vorteilen der hohen Auflösung von Luftdrucksensoren 21 kombiniert. Gleichzeitig werden die Nachteile der niedrigen Auflösung von Satellitensensoren 35 und von möglichen Luftdruckschwankungen bei Luftdrucksensoren 20 vermieden. Es ergibt sich, wie in Figur 14 zu erkennen, eine sehr hohe Übereinstimmung des effektiven Verlaufs der Höhenwerte 24 mit dem tatsächlichen Höhenverlauf 202 der Teststrecke.

Ein (erstes) Referenzsignal 28 kann beispielsweise zu Beginn einer Fahrt eingegeben oder erfasst werden oder dann, wenn die Höhe bekannt ist. Durch Differenzbildung von dem Luftdrucksignal 21 bei der Fahrt und dem Referenzsignal 28 kann ein Maß für die aktuelle Höhe ermittelt werden. Das Referenzsignal 28 kann zunächst ermittelt werde, indem ein anfängliches Luftdrucksignal 21 ermittelt wird und für folgende Messungen als Referenzsignal 28 verwendet wird. Das zugehörige Referenzsignal 28 kann auch eingegeben oder per Satellitensensor 35 erfasst werden. Im Laufe der Fahrt kann das Referenzsignal 28 periodisch und in unregelmäßigen Zeitabständen aktualisiert werden.

Die Korrektur des zur Berechnung eines Höhenmaßes 23 verwendeten Referenzsignals 28 kann beispielsweise durchgeführt werden, wenn die Summe der Abweichungen zwischen den Höhensignalen 36 des Satellitensensors 35 und den ermittelten Höhenwerten 24 über einen gewissen Zeitraum ein vorbestimmtes Maß oder eine vorbestimmte Schwelle überschreiten. Beispielsweise kann über eine bestimmte Strecke oder nach einem bestimmten Zeitraum ein Mittelwert gebildet werden, der entsprechend zum Vergleich herangezogen wird.

Vorzugsweise werden Höhensignale 36 zwischen etwa 20 oder 30-mal pro Sekunde und etwa 3 bis 5 mal pro Minute gemessen, insbesondere mit einer Frequenz von etwa 0,1 Hz. Die Frequenz, mit der ein aktuelles Höhenmaß aus einem aktuellen charakteristischen Luftdrucksignal für einen Umgebungsdruck erfasst wird, ist vorzugsweise höher und liegt insbesondere zwischen 0,1 Hz und 1 kHz und vorzugsweise zwischen 1 Hz und 100 Hz, besonders bevorzugt bei etwa 50 Hz.

Besonders bevorzugt ist ein Verhältnis der Messfrequenz des Luftdrucksignals 21 für einen Umgebungsdruck zu der Messfrequenz eines Höhensignals 36 größer 10 und insbesondere größer 100 und vorzugsweise kleiner 5000. Dadurch kann ein hohes Maß an Genauigkeit erreicht werden, während der Energiebedarf gering bleibt.

Zusätzlich sind in Figur 14 drei Verläufe 41, 42 und 43 der Messfrequenzen dargestellt. Die Messfrequenz für die Erfassung der Signale und insbesondere die Erfassung der Höhensignale oder die Erfassung der Luftdrucksignale hängt von den aktuellen Fahrbedingungen ab und kann mit der Steuereinrichtung 40 eingestellt und bei Bedarf verändert werden. So wird die Messfrequenz insbesondere an Steigungen und besonders bevorzugt an Gefällen größer eingestellt als auf geraden Strecken. Die Kurven 41 bis 43 zeigen jeweils die Messfrequenz über der Strecke und sind hier der besseren Übersichtlichkeit halber höhenversetzt eingezeichnet, um die Verläufe jeweils getrennt darzustellen.

Der erste Messverlauf 41 zeigt ein Beispiel mit grundsätzlich konstanter Messfrequenz, bei dem der Zustand der Energieversorgung etwa auf der Mitte der Strecke eine Schwelle unterschreitet. Danach werden Energiesparmaßnahmen eingeleitet und die Messfrequenz wird deutlich reduziert. Es ist möglich, dass auf dem reduzierten Niveau auch noch eine Variierung der Messfrequenz in Abhängigkeit von aktuellen Fahrbedingungen erfolgt, beispielsweise eine Erhöhung bei zunehmender Geschwindigkeit oder bei Steigungen oder bei Gefälle. In der Ebene kann die Messfrequenz auch noch weiter reduziert werden.

Der zweite Messverlauf 42 zeigt eine Steuerungsvariante, bei der im Bereich der ersten Steigung eine erhöhte Messfrequenz eingestellt wird. Nach Erreichen des mittleren Plateaus wird in dem dort ebenen Bereich die Messfrequenz erheblich reduziert (z. B. Faktor 1/2). Bei Beginn des Gefälles wird die Messfrequenz stark erhöht, damit bei der höheren Fahrgeschwindigkeit bergab eine sehr hohe Genauigkeit erzielt wird.

Der dritte Messverlauf 43 zeigt ein Beispiel, bei dem im Bereich der Neigungen des Weges (Steigung/Gefälle) mit erhöhter Messfrequenz gemessen wird, während in der Ebene mit reduzierter Messfrequenz gemessen wird. Dadurch wird im Bereich der Neigungen eine erhöhte Genauigkeit erreicht und es wird im Bereich der Ebene weniger Energie benötigt. Die Verläufe 41 bis 43 können insbesondere nicht nur die Messfrequenz über dem Weg, sondern können auch Verläufe der Messfrequenz über der Fahrzeit wiedergeben.

Die schematisch eingezeichneten Verläufe 41 bis 43 zeigen die Messfrequenz über dem Weg für eine konstant gefahrene Geschwindigkeit wird. Bei unterschiedlichen Fahrgeschwindigkeiten krümmen sich die Kurven entsprechend.

Es ist bevorzugt, dass die Messverläufe 41 bis 43 zu Beginn beim Zeitpunkt 0 jeweils die gleiche Messfrequenz aufweisen. Die absolute Höhe ist hier entsprechend versetzt dargestellt, um die Verläufe besser grafisch unterscheiden zu können.

Weiterhin ist in Figur 14 der Steigungsverlauf 44 über der Messstrecke strichpunktiert eingezeichnet. Zu Beginn ist der Verlauf der Steigung über das erste Drittel der Messstrecke konstant hoch. Dort liegt die Steigung bei einem Wert (rechte Skala) von +10,0. Im zweiten Drittel in der Ebene ist die Steigung 0,0 und im dritten Drittel liegt ein Gefälle mit einer Steigung von hier -10,0 vor. Über die periodisch erfassten Luftdrucksignale 21 und die zugehörigen Streckendaten kann ein Steigungswert 201 abgeleitet werden. Dazu werden die Daten zuvor noch gemittelt und gefiltert.

Mit dem bekannten Gewicht des Fahrrads und des Fahrers können dann Leistungsdaten aus dem aktuellen Steigungswert und dem aktuellen Geschwindigkeitswert abgeleitet werden. Dazu wird berücksichtigt, ob und wie das Fahrrad beschleunigt wird.

Unter Berücksichtigung der eingebrachten Leistung z.B. über Kraftsensoren an den Pedalen oder Drehmomentsensoren an geeigneten Stellen kann aus allen Daten auf den aktuellen Windwiderstand zurückgeschlossen werden. Das hilft dem Fahrer eine optimale Position während der Fahrt einzunehmen und auch zu behalten, da die relevanten Werte periodisch neu ermittelt und angezeigt werden. Insbesondere erfolgt eine Berechnung mit einer Frequenz von wenigstens 5 mal pro Minute, vorzugsweise von wenigstens 20 mal pro Minute. Auch Frequenzen von 0,5 Hz oder 1 Hz oder 10 Hz oder mehr sind möglich.

Insgesamt werden eine vorteilhafte Zweiradkomponente und ein vorteilhaftes Verfahren offenbart, womit verbesserte Möglichkeiten zur Messung von Daten an einem Fahrrad ermöglicht werden. Je nach Lage eines Luftdrucksensors zur Ermittlung des absoluten Umgebungsdrucks wird das Ergebnis der Messung durch die Geschwindigkeit des Fahrrads, die Windgeschwindigkeit und die Windrichtung beeinflusst, und kann somit an sich zunächst ein ungenaues Ergebnis liefern. Werden zur Staudruckmessung beispielsweise Luftdrucksensoren mit einem Pitot-Röhrchen eingesetzt, welche nach vorn in Fahrtrichtung geöffnet sind, ergibt sich dort ein Totaldruck, der von dem absolut vorherrschenden Luftdruck in der Umgebung und von der Fahrgeschwindigkeit abhängt. Dieses Drucksignal alleine reicht zur Bestimmung einer Höhe oder Steigung nicht aus, da dann der Eindruck einer Steigung entstehen würde, wenn der Fahrer in der Ebene beschleunigt.

Befindet sich der Luftdrucksensor zur Ermittlung des absoluten Luftdrucks in der Umgebung hingegen beispielsweise in dem Gehäuse der Zweiradkomponente oder in der Messeinrichtung 2, so staut sich die Luft vor dem Gehäuse als Folge des Fahrtwindes bzw. der Fahrgeschwindigkeit und erzeugt an der vorderen Spitze an dem Gehäuse einen Totaldruck, der den im Inneren des Gehäuses gemessenen absoluten Luftdruck auch negativ (oder positiv) beeinflusst.

Wird der Luftdrucksensor zur Erfassung des absoluten Luftdrucks auf einer Seite des Gehäuses an einer Öffnung angeordnet, so wird das Ergebnis durch den Bernoulli-Effekt ebenfalls negativ beeinflusst. Dabei kann ein Unterdruck durch die vorbeistreichende Luft erzeugt werden, der den absoluten Druck auch wieder - geschwindigkeitsabhängig - negativ beeinflussen würde.

Deshalb ist eine Korrektur des Luftdrucksignals 21 durch den Staudruckwert 26 sinnvoll und vorteilhaft, wenn geringe und auch geringste Steigungen mit der Zweiradkomponente 1 ermittelt werden sollen. Die Korrektur erfolgt insbesondere zusammen mit einer Kalibrierungsmatrix, die bei vorherigen Versuchen unter bekannten Bedingungen aufgenommen wurde. Dabei werden insbesondere für Variationen der Relativgeschwindigkeit und/oder Variationen des Gierwinkels Kalibrierwerte erfasst und gespeichert. Eine Korrektur ist beispielsweise vorteilhaft und wichtig, um eine ausreichend genaue Ermittlung des Luftwiderstands durchzuführen.

Die Korrektur eines Höhenwertes 24 mittels eines Höhensignals 36 eines Satellitensensors ist vorteilhaft, da auch bei Rundfahrten die Zweiradkomponente am Ende der Rundfahrt die gleiche Höhe anzeigt wie zu Beginn der Rundfahrt.

Aufgrund der relativ großen Abstufung bei der Messung wird deshalb in der Regel ein Höhenprofil über Luftdrucksensoren erfasst. Bei bekannten Fahrradcomputern tritt es dann aber häufig auf, dass aufgrund von Luftdruckschwankungen die Höhenangaben zu Beginn und am Ende einer Rundfahrt unterschiedlich sind. Tatsächlich ist der Fahrer dabei aber eine komplette Runde gefahren und befindet sich am Ende auf exakt derselben Höhe wie zu Beginn der Tour.

Durch die hier offenbarte Kombination der Auswertung von Satellitensensoren und Drucksensoren kann eine sehr genaue Höhenbestimmung und insbesondere eine sehr genaue Bestimmung der Steigung eines Weges oder einer Strecke durchgeführt werden. Die zum Antrieb des Fahrrads benötigte Leistung hängt in erheblichem Maße von der Beschleunigung, der gegebenenfalls vorhandenen Steigung, dem Rollwiderstand und dem Luftwiderstand abhängt, kann hiermit eine hohe Genauigkeit erreicht werden.

Mit der Erfindung kann der Fahrer seine Sitzposition und auch seine Zweiradkomponenten und sonstige Ausrüstung wie den Helm, den Anzug, die Kleidung etc. mit vermessen und während der Fahrt beurteilen. Damit kann ein Fahrer die für ihn optimale Sitzposition und Kombination aus Zweiradteilen und Ausrüstung herausfinden und z. B. den für sich aerodynamisch besten Helm ermitteln, der bei seiner bevorzugten Position den geringsten Luftwiderstand bietet.

Neben den beschriebenen Möglichkeiten zur Kalibrierung des Luftdrucksensors bei der Fahrt ist es auch möglich, eine erneute Kalibrierung durchzuführen, wenn der Luftdrucksensor eine bestimmte Steigung oder ein bestimmtes Gefälle festgestellt hat. Zum Beispiel nach einer Steigung oder einem Gefälle von 5 m oder 10 m. Möglich ist es auch, dass in bestimmten zeitlichen Abständen eine Rekalibrierung erfolgt. Möglich ist es auch, dass eine Kombination von zeitlicher Kalibrierung und Höhendifferenzüberschreitung durchgeführt wird.

Für die Messung von Luftdruckwerten werden vorzugsweise Luftdrucksensoren eingesetzt, die einen Messbereich aufweisen, der wenigstens 25% und insbesondere wenigstens 50% des Normaldrucks von (etwa) 100 kPa umfasst. Bevorzugt sind Luftdrucksensoren zur Erfassung des Umgebungsdrucks oder des Totaldrucks, die einen Messbereich größer 30 kPa und insbesondere wenigstens 50 kPa oder 60 kPa oder 80kPa aufweisen.

In bevorzugten Ausgestaltungen ist der Messbereich von den eingesetzten Differenzdrucksensoren kleiner als der von den eingesetzten Luftdrucksensoren. Differenzdrucksensoren werden insbesondere zur Erfassung des Staudruckes und/oder des Gierwinkels eingesetzt. Vorzugsweise ist ein Messbereich eines eingesetzten Differenzdrucksensors kleiner als 20 kPa und insbesondere kleiner als 10 kPa und besonders bevorzugt kleiner als 5 kPa oder 2 kPa oder 1 kPa. In einem konkreten Beispiel werden Differenzdrucksensoren eingesetzt, die einen Messbereich von 0,5 kPa (+/-20%) aufweisen. Dadurch wird eine hohe Auflösung und Genauigkeit ermöglicht.

Der Messbereich eines Luftdrucksensors zur Erfassung des Umgebungsdrucks oder des Totaldrucks ist vorzugsweise größer als der Messbereich eines Differenzdrucksensors für den Staudruck oder zur Bestimmung des Gierwinkels.

Ein Verhältnis eines Messbereichs eines Luftdrucksensors zur Erfassung des Umgebungsdrucks oder des Totaldrucks zu einem Messbereich eines Differenzdrucksensors für den Staudruck oder zur Bestimmung des Gierwinkels ist vorzugsweise größer als 5:1 und insbesondere größer 10:1 und besonders bevorzugt größer 50:1.

In allen Ausgestaltungen ist es bevorzugt, dass eine Temperaturkorrektur der Messwerte durchgeführt wird, um Temperatureinflüsse zu vermeiden.

Die Ausgestaltung der Messsonde bzw. des Sondenkörpers 5 ist vorteilhaft, da damit unabhängig von den äußeren Bedingungen ein Fahrrad betrieben werden kann. Durch die Ausgestaltung der Luftführung im Inneren des Sondenkörpers 5 wird es zuverlässig verhindert, dass eventuell ein dringendes Wasser zu einem Luftdrucksensor geleitet wird. Und falls einmal ein Tröpfchen Wasser oder Schmutz eingedrungen sein sollte, wird es in dem Aufnahmeraum 17 einer Kammer 15 zurückgehalten. Anschließend kann das Wasser dort beispielsweise durch Verdampfung wieder nach außen austreten oder nach Abnahme des insbesondere ansteckbaren Sondenkörpers 5 manuell gereinigt, durchgespült und/oder ausgeblasen werden. Durch die Luftkanäle und deren Abmessungen und die Kammer(n) wird eine Labyrinthdichtung mit einem zusätzlichen Aufnahmeraum zur Verfügung gestellt, sodass eine Wasserdichtigkeit der Messsonde 4 unter allen im alltäglichen Betrieb auftretenden Bedingungen erreicht wird.

Mit einer konventionellen Membrane im Inneren der Messsonde, um den Zufuhrkanal 11 mechanisch von dem Sensorkanal 12 abzutrennen, wird in der Regel eine ausreichende Dichtigkeit erzielt. Nachteilig ist aber, dass die Genauigkeit erheblich verringert wird und somit das Messergebnis verschlechtert wird, sodass eine ausreichend genaue Ermittlung eines Luftwiderstandsbeiwerts nicht erzielbar ist. Mit der hier offenbarten Messsonde 4 werden eine ausreichende Dichtigkeit und eine ausreichende Genauigkeit erreicht.

Vorzugsweise wird der Sondenkörper 5 durch einen 3D-Druckverfahren wenigstens teilweise oder vollständig aus Kunststoff und/oder wenigstens teilweise oder vollständig aus Metall hergestellt. In dem Inneren kann eine Dichtung bzw. Labyrinthdichtung integral ausgebildet ist. Ein 3D-Druckverfahren ermöglicht es, einen Sondenkörper viel leichter herzustellen als mit konventioneller Technologie. So kann dort, wo sonst aus verfahrenstechnischen Gründen volles Material sein muss, ein Hohlraum erzeugt werden.

**Bezugszeichenliste:**

| | | | |
|---|---|---|---|
| 1 | Zweiradkomponente | 30b | Öffnung |
| 2 | Messeinrichtung | 30c | Differenzdrucksensor |
| 3 | Gehäuse | 32 | Gierwinkel |
| 4 | Messsonde | 33 | Relative Windrichtung und Windstärke |
| 5 | Sondenkörper | | |
| 6 | Öffnung in 5 | 34 | Fahrgeschwindigkeit |
| 6a | Öffnung | 35 | Satellitensensor |
| 7 | Öffnung | 36 | Höhensignal |
| 8 | Abmessung von 5 | 37 | Feuchtesensor |
| 10 | Luftführung | 38 | Beschleunigungssensor |
| 11 | Luftkanal, Zufuhrkanal | 40 | Steuereinrichtung |
| 12 | Luftkanal, Sensorkanal | 41 | erster Messverlauf |
| 13 | Luftkanal, Zwischenkanal | 42 | zweiter Messverlauf |
| 14 | Labyrinthdichtung | 43 | dritter Messverlauf |
| 15 | Kammer | 50 | Recheneinrichtung |
| 15a | Teilkammer | 51 | Speicher |
| 15b | Teilkammer | 52 | Datenschnittstelle, Netzwerkschnittstelle |
| 15c | Zwischenwand | | |
| 15d | Verbindungsöffnung | 53 | Kalibrierdaten |
| 16 | Kammer | 54 | Energiequelle |
| 17 | Aufnahmeraum in 15, 16 | 100 | Fahrrad |
| 18 | Wasser | 101 | Rad, Vorderrad |
| 19 | Querschnitt von 11-13 | 102 | Rad, Hinterrad |
| 20 | Luftdrucksensor, Absolutdrucksensor | 103 | Rahmen |
| | | 104 | Gabel, Federgabel |
| 21 | Luftdrucksignal von 20, Sensorwert von 20, | 106 | Lenker |
| | | 107 | Sattel |
| 22 | korrigierter Umgebungsdruckwert | 109 | Speiche |
| | | 110 | Felge |
| 23 | Höhenmaß | 112 | Tretkurbel |
| 24 | Höhenwert | 115 | Geschwindigkeitssensor |
| 25 | Staudrucksensorsystem, Pitot-Sensor | 116 | Leistungssensor, Kraftsensor |
| 25c | Differenzdrucksensor | 120 | Höhe |
| 26 | Staudruckwert, Sensorwert von 25 | 200 | Weg |
| | | 201 | Steigungswert, Steigungswinkel |
| 27 | Höhenänderung | | |
| 28 | Referenzsignal | 202 | Höhenverlauf |
| 30 | Gier-Sensorsystem | 300 | Satellitensystem |
| 30a | Öffnung | 301 | Satellit |

## Patentansprüche

1. Verfahren zum Bestimmen von Leistungsdaten durch das Erfassen und Auswerten von Sensordaten beim Fahren eines wenigstens teilweise muskelbetriebenen Fahrrads (100) auf einem Weg (200) mit wenigstens zwei Sensoren (20, 35) wobei wenigstens Luftdrucksignale (21) erfasst werden und wobei die folgenden Schritte durchgeführt werden:
- Erfassen wenigstens eines aktuellen Luftdrucksignals (21) für einen Umgebungsdruck mit wenigstens einem Luftdrucksensor (20) und Ableitung eines aktuellen Höhenmaßes (23);
- Bestimmen eines aktuellen Steigungswerts (201) des Weges (200) aus den erfassten Luftdrucksignalen (21);
- Erfassen von Streckendaten und Bestimmen einer aktuellen Geschwindigkeitswerts;
- Ermittlung von Leistungsdaten aus dem aktuellen Steigungswert (201) und dem aktuellen Geschwindigkeitswert.

2. Verfahren nach einem der vorhergehenden Ansprüche, wobei das aktuelle Luftdrucksignal (21) periodisch mit einer Frequenz größer 10 Hz erfasst wird.

3. Verfahren nach einem der vorhergehenden Ansprüche, wobei ein Luftdrucksignal (21) aus einer Mehrzahl von mit dem Luftdrucksensor aufgenommenen Messwerten ermittelt wird und wobei mit dem Luftdrucksensor (20) aufgenommene Messwerte gefiltert werden und aus den gefilterten Messwerten ein Luftdrucksignal (21) abgeleitet wird.

4. Verfahren nach einem der vorhergehenden Ansprüche, wobei wenigstens ein Beschleunigungswert abgeleitet wird.

5. Verfahren nach einem der vorhergehenden Ansprüche, wobei wenigstens ein aktuelles Höhensignal (36) durch Erfassung von Daten von einem Satellitensystem (300) abgeleitet wird und wobei ein aktueller Höhenwert (24) aus dem aktuellen Luftdrucksignal (21) unter Berücksichtigung des aktuellen Höhensignals (36) abgeleitet wird.

6. Verfahren nach einem der vorhergehenden Ansprüche, wobei Störsignale (29) wie z. B. durch vorbeifahrende Fahrzeuge oder Windböen hervorgerufene Störungen herausgefiltert werden.

7. Verfahren nach einem der vorhergehenden Ansprüche, wobei wenigstens ein aerodynamischer Luftwiderstandsbeiwert abgeleitet wird.

8. Verfahren nach einem der drei vorhergehenden Ansprüche, wobei die Frequenz zur Erfassung der Luftdrucksignale (21) mit dem Luftdrucksensor (20) größer ist als die Frequenz zur Erfassung der Höhensignale (36) von dem Satellitensystem (300).

9. Verfahren nach einem der vier vorhergehenden Ansprüche, wobei ein Erfassungszeitpunkt des Luftdrucksignals (21) und des Höhensignals (36) zur Ableitung eines Höhenwertes (24) aufeinander abgestimmt oder synchronisiert werden.

10. Verfahren nach einem der vorhergehenden Ansprüche, wobei wenigstens eine Messfrequenz zur Erfassung von Signalen mit einer Steuereinrichtung (40) variabel eingestellt wird.

11. Verfahren nach dem vorhergehenden Anspruch, wobei die Messfrequenz in Abhängigkeit von wenigstens einer aktuellen Fahrbedingung eingestellt wird.

12. Verfahren nach einem der vorhergehenden Ansprüche, wobei eine Frequenz zur Ableitung eines Höhenwertes (24) von der Fahrgeschwindigkeit des Fahrrads (100) abhängt und mit zunehmender Fahrgeschwindigkeit größer wird oder wobei eine Frequenz zur Ableitung eines Höhenwertes (24) von der Steigung (201) des Weges (200) und/oder der Beschleunigung abhängt.

13. Zweiradkomponente (1) mit einer Steuereinrichtung (40) und einer Messeinrichtung (2) zum Bestimmen von Leistungsdaten durch das Erfassen und Auswerten von Sensordaten beim Fahren eines wenigstens teilweise muskelbetriebenen Fahrrads (100) auf einem Weg (200) mit wenigstens zwei Sensoren (20, 35), wobei wenigstens ein Luftdrucksensor (20) zum Erfassen eines charakteristischen aktuellen Luftdrucksignals (21) umfasst ist,
und wobei eine Recheneinrichtung (50) umfasst ist, welche dazu ausgebildet und eingerichtet ist,
aus den erfassten Luftdrucksignalen (21) einen aktuellen Steigungswert (201) des Weges (200) zu bestimmen und Streckendaten zu erfassen und daraus einen aktuellen Geschwindigkeitswert zu bestimmen und aus dem aktuellen Steigungswert (201) und der aktuellen Geschwindigkeit Leistungsdaten zu ermitteln.
